# EUROPEAN PATENT SPECIFICATION

(11) **EP 0 768 931 B1**
(45) Date of publication and mention of the grant of the patent: **12.01.2000**
(21) Application number: 96914110.0
(22) Date of filing: 23.04.1996
(51) Int. Cl.: B23K 9/04, B23K 10/02

(54) **DEVICE FOR PLASMA WELDING HAVING A POWDER DOSING MEMBER ACTING BY GRAVITY FALL**
VORRICHTUNG ZUM PLASMASCHWEISSEN MIT EINER MITTELS SCHWERKRAFT GEBRAUCHENDEN PULVERDOSIERUNGSVORRICHTUNG
DISPOSITIF DE SOUDAGE AU PLASMA DOTE D'UN ELEMENT DE DOSAGE DE POUDRE TOMBANT PAR GRAVITE

(30) Priority: 03.05.1995 IT TO950349
(43) Date of publication of application: 23.04.1997
(73) Proprietor: Parmaprogetti S.R.L., 43019 Soragna (IT)
(72) Inventor: FAROLDI, Bruno, I-43036 Fidenza (IT)
(74) Representative: Patrito, Pier Franco, Dr. Ing.
(86) International application number: EP9601707
(87) International publication number: WO9634715

(56) References cited:
- EP-A- 0 309 822
- EP-A- 0 417 731
- US-A- 4 125 754
- US-A- 4 472 619

## Description

The subject of the present invention is a device for plasma welding with transferred arc, for surfacing with hard powders on workpieces, including a welding torch, a powder dispenser with dosing member, and means for conveying the powder from the dispenser to the weld region.

For the plasma welding with transferred arc are of essential importance the torch, the powder dispenser with dosing member and their connection means, and the main requirements concern the thickness of the surfacing and the penetration attained in the workpiece.

The known technique offers for this kind of devices various solutions: most of them provide for one or more powder dispensers which are materially separated from the torch and are connected to the same by means of tubes across which runs a gas stream. The dosing, namely the control of the delivered rate of powder, takes place at the dispensers. Then the powder, pushed by the gas stream, after travel along a certain length in the tubes enters the torch and reaches the welding region where the electric arc is generated.

This structure and its mode of operation involves several disadvantages, namely:
- there is always a noticeable delay between the moment in which the powder leaves the dispenser, which is the moment in which the dosing is carried out, and the moment in which the powder reaches the weld region;
- along the tubes some temporary powder accumulations may take place, and the powder is then suddenly sprinkled in the weld region;
- the accumulations in the tubes may give rise to obstructions which, when are formed, cause the interruption of the operating cycle and may even cause damages to the workpiece.

These drawbacks, even when they have no heavier consequences, hinder a precise control of the delivered rate of powder, and therefore give rise to incorrect, uneven and not repeatable penetrations and thicknesses of the surfacing.

In order to improve the formerly known devices, the documents US-A-4.472.619 and EP-A-0.309.822 disclose devices for plasma welding with transferred arc, for surfacing with hard powers on workpieces, including a welding torch determining a weld region, a powder dispenser, a dosing member and means for conveying the powder from the dispenser to the weld region through a descent tube directed downwards.

However, according to US-A-4.472.619 considered as the closest prior art, there is provided only one powder dispenser, located onto the torch, which, in order not to hinder the displacements of the torch, cannot have a great size, whereby the device can be used only for operations which require a limited amount of powder.

On the other hand, according to EP-A-0.309.822 there is provided a powder dispenser which may have any size because it is not annexed to the torch, and is connected to the torch by a supply line inserted downstream a metering device: the supply line cannot be long nor flexible, whereby the device is only suitable for systems in which the torch is kept stationary.

The object of this invention is to avoid or reduce the cited disadvantages, by providing a device capable of precisely controlling the delivered rate of powder in the very region of its use, by preventing any possible accumulation and the consequent interruptions of the operating cycle or the irregularities in the delivered rate of powder.

The device for plasma welding with transferred arc according to the invention is defined in claim 1.

Preferably, according to a further aspect of the invention, said dosing member is embodied by constructing said initial portion of the powder descent tube by means of an elastic material, such as for example rubber, on which acts a shutter which causes a controlled throttle thereof.

Thanks to these features, the distance covered by the powder from the dosing region to the weld region is reduced to a minimum, and the travel of the powder along this distance is due to the gravity, not to a gas stream. As a consequence, the delay from the moment in which the powder is dosed and the moment in which it is applied onto the workpiece becomes negligible, and no temporary accumulation or obstruction may take place.

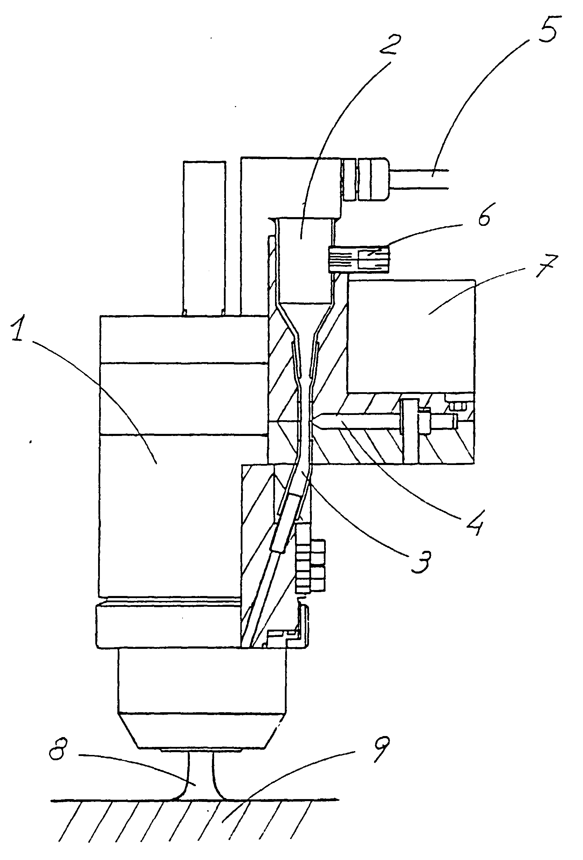

These and other features, objects and advantages of the invention will be better understood from the following description of an embodiment, having the non limiting character of an example, diagrammatically shown in the sole Figure of the appended drawing, which diagrammatically represents a view of the whole device for plasma welding according to the invention, showing some parts thereof in cross section.

In the Figure, number 1 designates the welding torch, which per se may be of any known or special embodiment, and therefore will not be described in detail. Number 2 designates the dispenser, which is mounted on the torch 1 itself, and number 3 designates the descent tube for the powder, which is directed downwards from the dispenser 2 to the weld region and has an initial portion formed by an elastic material of the type of the rubber. Number 4 designates the shutter, which acts on the initial elastic portion of the descent tube 3, and is driven by a motor 7; number 8 designates the weld region wherein an electric arc is generated, and number 9 designates the workpiece onto which a surfacing should be made by means of the powder contained in the dispenser 2.

In order to supplying the dispenser 2, the powder arrives from one or more main containers (which are not shown, and may be positioned anywhere) through a connection tube 5; number 6 designates a level sensor, which measures the powder level in the dispenser 2 and cooperates with means (not shown and per se known) intended for supplying the dispenser 2 in order that it cannot become empty; the flow of the supply of powder is therefore controlled by the level sensor 6.

From the dispenser 2 the powder, falling by gravity along the descent tube 3, arrives to the weld region (8) where, by means of an electric arc, is welded onto the workpiece 9.

The rate of powder which comes down on the workpiece is controlled by the shutter 4 driven by its motor 7, by more or less strangling the initial elastic portion of the descent tube 3. The regulation of the rate of powder by means of the modification of the cross section of the descent tube 3 due to its controlled throttle operated by the shutter 4 is very advantageous, because it allows accurately dosing the rate of powder which is forwarded to the weld region, without introducing hindrances which might cause possible obstructions.

As it may be understood, thanks to the application of the invention there is provided a welding torch device of a simple structure, sturdy and reliable, which is capable of operating by avoiding at least most of the disadvantages of the welding torches according to the former technique.

Although the subject of the invention has been described and shown with reference to a specific embodiment, it should be understood that this latter has the character of a non limiting example, and that different modifications may be introduced; for example, the level sensor 6 and the motor 7 may be of any kind and, although the dosing member device consisting of an elastic portion of the descent tube 3 and a shutter which throttles in controlled manner the same represents a preferred solution, also other dosing means could be used.

These and other modifications, and any replacement by technically equivalent means, may be applied within the scope of the appended Claims

## Claims

1. Device for plasma welding with transferred arc, for surfacing with hard powders on workpieces (9), including a welding torch (1) determining a weld region (8) and means supplying a powder to the weld region (8) through a descent tube (3) directed downwards, wherein said means supplying the powder to the weld region (8) comprise a main container, a powder dispenser (2), means (5) connecting said main container to said powder dispenser (2), said descent tube (3) being directed downwards from said powder dispenser (2) to said weld region (8), characterised by a dosing member (4) inserted at an initial portion of said descent tube (3), said powder dispenser (2), said descent tube (3) and said dosing member (4) forming a unit mounted on said welding torch (1).

2. Welding device as set forth in Claim 1, characterized in that it comprises a level sensor (6) operatively inserted in said powder dispenser (2) for measuring the powder level in said powder dispenser (2) and controlling the supply of powder from said main container to said powder dispenser (2) through supplying means.

3. Welding device as set forth in Claim 1, characterized in that said dosing member (4) comprises an initial portion of the descent tube (3) formed of an elastic material, such as rubber, and a shutter (4) intended to produce a controlled throttle of said descent tube (3) for the powder in order to control the rate of powder delivered to the weld region (8).

4. Welding device as set forth in Claim 1, characterized in that the powder proceeds from said powder dispenser (2) to said weld region (8) through said descent tube (3) by gravity fall.

## Patentansprüche

1. Plasma-Schweissvorrichtung mit versetztem Lichtbogen zum Auftragen von hartem Pulver auf die Oberfläche von Werkstücken (9), mit einem Plasmabrenner (1), der einen Schweissbereich (8) begrenzt, und mit Mitteln, die das Pulver über ein nach unten gerichtetes Fallrohr (3) dem Schweissbereich (8) zuzuführen, wobei diese Mittel zur Pulverzufuhr dem Schweissbereich (8) einen Hauptbehälter, einen Pulververteiler (2) und Mittel (5) aufweisen, die den Hauptbehälter mit dem Pulververteiler (2) verbinden, und wobei das Fallrohr (3) von dem Pulververteiler (2) nach unten auf den Schweissbereich (8) gerichtet ist, durch eine in einem anfänglichen Abschnitt des Fallrohres (3) eingefügte Dosiereinrichtung (4) gekennzeichnet, wobei der Pulververteiler (2), das Fallrohr (3) und die Dosiereinrichtung (4) zusammen eine am Plasmabrenner (1) angeordnete Einheit bilden.

2. Schweissvorrichtung nach Anspruch 1, dadurch gekennzeichnet, dass dieselbe einen Pegelsensor (6) aufweist, der im Pulververteiler (2) wirksam eingesetzt ist und die Zufuhr des Pulvers vom Hauptbehälter zum Pulververteiler (2) über die Zufuhrmittel ansteuert.

3. Schweissvorrichtung nach Anspruch 1, dadurch gekennzeichnet, dass die Dosiereinrichtung (4) einen anfänglichen, aus einem elastischen Material, wie etwa Gummi, bestehenden Abschnitt des Fallrohres (3) sowie einen Schliessteil (4) umfasst, der dazu bestimmt ist, in dem das abfallende Pulver führende Rohr (3) eine einstellbare Drosselstelle zu schaffen, um die zum Schweissbereich (8) abgegebene Pulvermenge zu kontrollieren.

4. Schweissvorrichtung nach Anspruch 1, dadurch gekennzeichnet, dass das aus dem Pulververteiler (2) austretende Pulver im freien Fall durch Schwerkraft durch das Fallrohr (3) zum Schweissbereich (8) gelangt.

## Revendications

1. Dispositif pour la soudure par plasma moyennant arc transféré, pour le traitement superficiel par des poudres dures sur des pièces à travailler (9), comportant une torche à souder (1) laquelle détermine une région de soudure (8), et des moyens pour transporter la poudre à ladite région de soudure (8) à travers un tube de descente (3) dirigé vers le bas, dans lequel lesdits moyens pour alimenter la poudre à la région de soudure (8) comprennent un réservoir principal, un distributeur de poudre (2), des moyens (5) reliant ledit réservoir principal audit distributeur de poudre (2), le tube de descente (3) étant dirigé vers le bas dudit distributeur de poudre (2) à ladite région de soudure (8), caractérisé par un moyen de dosage (4) inséré dans une portion initiale dudit tube de descente (3), ledit distributeur de poudre (2), ledit tube de descente (3) et ledit organe de dosage (4) constituant un ensemble monté sur ladite torche è souder (1).

2. Dispositif de soudure suivant la revendication 1, caractérisé en ce qu'il comprend un capteur de niveau (6) opérativement inséré dans ledit distributeur de poudre (2) pour mesurer le niveau de poudre dans ledit distributeur de poudre (2) et contrôler l'alimentation de poudre à partir dudit réservoir principal audit distributeur de poudre (2) à travers des moyens d'alimentation.

3. Dispositif de soudure suivant la revendication 1, caractérisé en ce que ledit organe de dosage (4) comprend une portion initiale dudit tube de descente (3) constituée par un matériau élastique, comme le caoutchouc, et un obturateur (4) disposé pour produire un étranglement contrôlé dudit tube de descente (3) pour la poudre, de sorte à contrôler la quantité de poudre débitée dans la région de soudure (8).

4. Dispositif de soudure suivant la revendication 1, caractérisé en ce que la poudre avance dudit distributeur de poudre (2) à ladite région de soudure (8) à travers ledit tube de descente (3) par chute par gravité.
